# EUROPÄISCHE PATENTANMELDUNG

(11) **EP 1 309 179 A2**
(43) Veröffentlichungstag der Anmeldung: **07.05.2003**
(21) Anmeldenummer: 02024151.9
(22) Anmeldetag: 30.10.2002
(51) Int. Cl.: H04N 3/26

(54) **Vorrichtung und Verfahren für das Erzeugen einer Fokuselektrodenspannung für eine Bildröhre**

(30) Priorität: 02.11.2001 DE 10153905
(71) Anmelder: GRUNDIG Aktiengesellschaft, 90471 Nürnberg (DE)
(72) Erfinder: Nassauer, Erwin, 90613 Grosshabersdorf (DE)

(57) **Zusammenfassung**

Die vorliegende Erfindung betrifft eine Vorrichtung und ein Verfahren für das Erzeugen einer Fokuselektrodenspannung für eine Bildröhre.

Zur Anpassung an Schwankungen wird vorgeschlagen, bei hohen Strahlströmen eine hohe Fokuselektrodenspannung zu erzeugen, wohingegen bei niedrigen Strahlströmen eine niedrige Fokuselektrodenspannung erzeugt wird, also daß die Erzeugung der Fokuselektrodenspannung in Abhängigkeit von der Höhe des Strahlstroms erfolgt. Dadurch wird erreicht, daß für durch den Bildinhalt verursachte Änderungen des Strahlstroms immer eine für den jeweiligen Strahlstrom optimale Fokuselektrodenspannung zur Verfügung steht, wodurch sichergestellt wird, daß das wiederzugebende Bild zu jedem Zeitpunkt scharf auf der Bildröhre dargestellt wird.

## Beschreibung

Die vorliegende Erfindung betrifft eine Vorrichtung und ein Verfahren für das Erzeugen einer Fokuselektrodenspannung für eine Bildröhre.

Vorrichtungen für das Erzeugen einer Fokuselektrodenspannung für eine Bildröhre sind aus dem Stand der Technik bekannt. Aus der DE 44 40 506 A1 ist es beispielsweise bekannt, eine Fokuselektrodenspannung für eine Bildröhre mittels eines niederohmingen Spannungsteilers aus einer Hochspannung eines Zeilentrafos abzuleiten. Zum Ausgleich von Leckströmen, welche innerhalb der Bildröhre entstehen können, wird eine Impulsspannung an einen Abgriff des Spannungsteilers angelegt. Änderungen, die durch die zeitlich variablen Leckströme hervorgerufen werden, können somit ausgeglichen werden.

Die bekannten Vorrichtungen erzeugt bei der Wiedergabe verschiedener Bildinhalte Strahlströme unterschiedlicher Größe. Hierdurch entsteht der Nachteil, dass geänderte Strahlströme jedoch entsprechend geänderter Fokuselektrodenspannungen zuzuordnen sind. Bei den bekannten Vorrichtungen wird die Fokuselektrodenspannung jedoch für bestimmte Bildinhalte eingestellt, zum Beispiel Testbilder, um bei VGA-Darstellung oder Anzeige von bewegten Bildinhalten möglichst einen Mittelwert zu erreichen. Da die Gewinnung der Fokuselektrodenspannung niederohmig mittels eines Spannungsteilers aus einer Hochspannung des Zeilentrafos erfolgt, paßt sie sich nicht selbst im erforderlichen Maß an, um bei unterschiedlichen Strahlströmen den optimalen Fokuspunkt der CRT zu erreichen.

Es ist daher Aufgabe der vorliegenden Erfindung, eine Vorrichtung und ein Verfahren für das Erzeugen einer Fokuselektrodenspannung für eine Bildröhre anzugeben, bei denen die Fokuselektrodenspannung an durch Änderungen von darzustellenden Bildinhalten verursachte Schwankungen eines Strahlstroms und hierdurch bedingten Hochspannungsänderungen angepaßt ist.

Bei der vorliegenden Erfindung wird diese Aufgabe durch die Merkmale des Anspruchs 1 bzw. 10 gelöst.

Dabei wird davon ausgegangen, daß bei hohen Strahlströmen eine zu niedrige Fokuselektrodenspannung erzeugt wird, wohingegen bei niedrigen Strahlströmen eine zu hohe Fokuselektrodenspannung erzeugt wird, also daß die Erzeugung der Fokuselektrodenspannung in Abhängigkeit von der Höhe des Strahlstroms erfolgt, jedoch hierdurch nicht der optimale Fokuspunkt der CRT erreicht wird.

Der Vorteil der Erfindung ist darin zu sehen, daß durch die Anpassung der Fokuselektrodenspannung an durch den Bildinhalt verursachte Strahlströme immer eine für die Strahlströme bzw. Hochspannung optimale Fokuselektrodenspannung zur Verfügung steht, wodurch sichergestellt ist, daß das wiederzugebende Bild zu jedem Zeitpunkt scharf auf der Bildröhre dargestellt wird, unabhängig vom Bildinhalt oder des verwendeten Darstellungsmodus wie VGA oder dergleichen.

Weitere Vorteile der vorliegenden Erfindung ergeben sich aus den anhängigen Ansprüchen sowie der nachfolgenden Beschreibung von Ausführungsformen einer erfindungsgemäßen Vorrichtung anhand von Figuren.

Es zeigt:
- Fig. 1: ein Blockschaltbild einer ersten erfindungsgemäßen Ausführungsform einer Vorrichtung für das Erzeugen einer Fokuselektrodenspannung für eine Bildröhre und
- Fig. 2: ein Prinzipschaltbild einer erfindungsgemäßen Ausführungsform einer Vorrichtung für das Erzeugen einer Fokuselektrodenspannung für eine Bildröhre.

Zur Erleichterung des Verständnisses der vorliegenden Erfindung sind in den Figuren nur die Bestandteile der Ausführungsformen dargestellt, die im Zusammenhang mit der Erfindung von Bedeutung sind. Gleichartige Bestandteile in den Figuren weisen die selben Bezugszeichen auf.

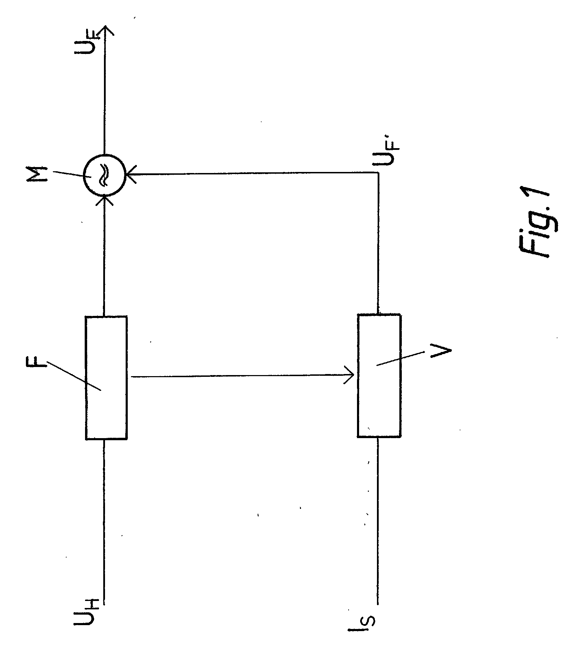

Figur 1 zeigt ein Blockschaltbild einer ersten erfindungsgemäßen Ausführungsform einer Vorrichtung für das Erzeugen einer Fokuselektrodenspannung U_{F} für eine Bildröhre. Eine beispielsweise von einem dargestellten Zeilentrafos stammende Hochspannung U_{H} und eine Fokuselektrodenspannung U_{F'}, welche über die Vorrichtungen F,V aus dem Strahlstrom I_{S} und der Hochspannung U_{H} gewonnen wird, wird über eine Einrichtung M moduliert und ergibt die Fokuselektrodenspannung U_{F}. Die weiteren Bauteile der Einrichtung M werden durch einen Funkenüberschlagschutz F vor zu hohen Spannungen vom Zeilentrafo und damit vor Funkenüberschlag geschützt.

Die Einrichtung M moduliert in Abhängigkeit von der Hochspannung U_{H} und damit in Abhängigkeit von der Höhe des fließenden Strahlstroms I_{S} die Fokuselektrodenspannung U_{F}, so dass für hohe Strahlströme und damit niedrige Hochspannungen U_{H} eine hohe Fokuselektrodenspannung U_{F} erzeugt wird und für hohe Hochspannungen U_{H} eine niedrige Fokuselektrodenspannung U_{F}. Dabei kann es beispielsweise vorgesehen sein, daß der Spannungsregler V die Strahlstromspannung U_{S} bzw. den Strahlstrom I_{S} auswertet und bei Unter- oder Überschreiten eines oder mehrerer Schwellenwerte zwischen fest vorgegebenen Fokuselektrodenspannungen U_{F} umschaltet. Für die eingangs beschriebene Darstellung von VGA- und Bewegtbildern kann somit eine niedrige und eine hohe Fokuselektrodenspannung U_{F} vorgesehen sein, zwischen denen der Spannungsregler V bei Über- oder Unterschreiten des Schwellenwerts sprungartig umschaltet. Werden mehrere Schwellenwerte verwendet, kann der Spannungsregler V die Fokuselektrodenspannung U_{F} in Abhängigkeit vom Strahlstrom I_{S} und damit vom fließenden Strahlstrom in mehreren Stufen anpassen. Damit ist es beispielsweise möglich, die Fokuselektrodenspannung U_{F} an den Bildinhalt anzupassen, da z. B. bei hellem Bildinhalt, insbesondere bei Helligkeit und hohem Kontrast, bzw. im Bildinhalt dargestellte helle Flächen oder Bereiche, ein höherer Strahlstrom I_{S} fließt als bei dunklerem Bildinhalt.

Der Schwellenwert kann beispielsweise mittels eines Differenzverstärkers überwacht werden, an dessen einen Eingang die zu überwachende Strahlstromspannung U_{S} angelegt wird, wohingegen an den anderen Eingang eine den Schwellenwert bildende Vergleichsspannung angelegt wird. Ebenso ist es möglich, die Strahlstromspannung U_{S} mittels eines Analog/Digital-Wandlers zu digitalisieren und den digitalen Wert in einem Mikrocomputer mit einem entsprechenden digitalen Schwellenwert zu vergleichen.

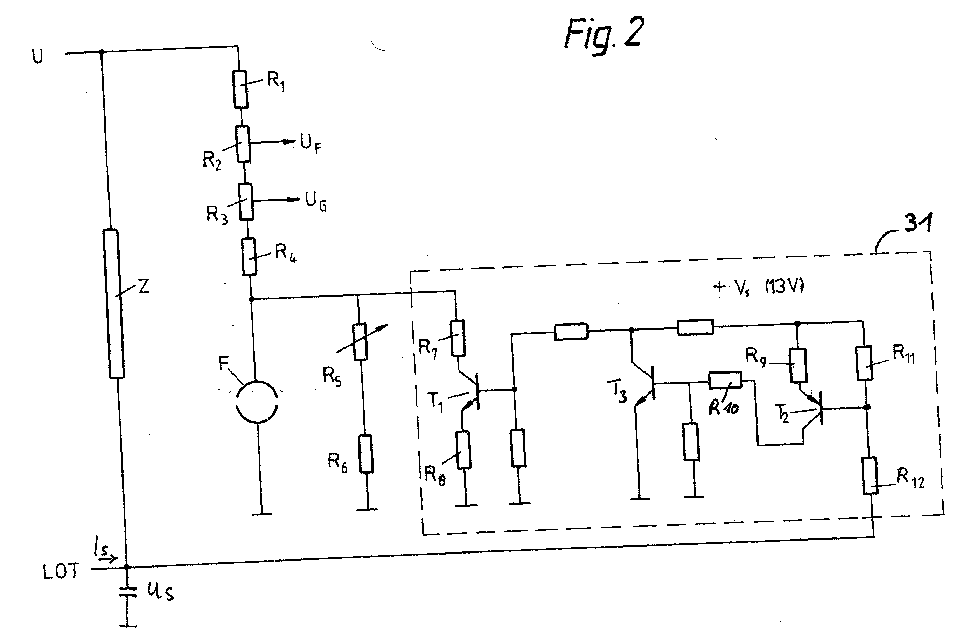

Figur 2 zeigt ein Prinzipschaltbild einer erfindungsgemäßen Ausführungsform einer Vorrichtung für das Erzeugen einer Fokuselektrodenspannung U_{F} für eine Bildröhre. Die Vorrichtung umfaßt eine Einrichtung Z für die Erzeugung einer Hochspannung U_{H} bzw. eines Strahlstroms I_{S}, beispielsweise einen Zeilentrafo, und einen Spannungsteiler, der aus Widerständen R₁ bis R₆ aufgebaut ist. Das eine Ende des Spannungsteilers ist über einen Vorwiderstand R₁ an der Hochspannung U_{H} angeschlossen, wohingegen das andere Ende über einen Widerstand R₆ auf Masse gelegt ist. Von Widerstand R₂ des Spannungsteilers wird die Fokuselektrodenspannung U_{F}, von Widerstand R₃ eine Gitterelektrodenspannung U_{G} abgeleitet, wozu die Widerstände R₂ und R₃ beispielsweise als Potentiometer ausgelegt sein können. Nach einem weiteren Widerstand R₄ folgt ein Widerstand R₅, welcher als Potentiometer ausgelegt ist, und zur Grundeinstellung des durch den Spannungsteiler fließenden Stroms und somit zur Grundeinstellung der Fokuselektrodenspannung U_{F} und der Gitterelektrodenspannung U_{G} dient. Um die weiteren Bauteile der Vorrichtung gegen Funkenüberschlag bzw. zu hohe Spannungen vom Zeilentrafo Z zu schützen, ist eine Funkenüberschlagschutz F vorgesehen, der zwischen den Widerständen R₄ und R₅ angeschlossen ist.

Ebenfalls zwischen den Widerständen R₄ und R₅ ist eine Einrichtung 31 zur Erzeugung der Fokuselektrodenspannung U_{F} angeschlossen. Die Einrichtung 31 zur Erzeugung der Fokuselektrodenspannung U_{F} kann als Modulator ausgelegt sein, welcher die Fokuselektrodenspannung U_{F} entsprechend der Änderungen des Strahlstroms I_{S} ändert, d. h. moduliert. Dazu kann die Einrichtung 31 zur Erzeugung der Fokuselektrodenspannung U_{F} über eine Reihenschaltung aus einem Widerstand R₇, der mit dem Kollektor eines npn-Transistor T₁ verbunden ist, dessen Emitter mit einem Widerstand R₈ verbunden ist, dessen anderes Ende auf Masse gelegt ist, an den Spannungsteiler R₁ bis R₆, zwischen den Widerständen R₄ und R₅, angeschlossen sein. Durch Ansteuerung des npn-Transistors T₁ ist es möglich, den Widerstand der Spannungsteilers, der aus den Widerständen R₁ bis R₆ gebildet wird, zu verändern und somit die Fokuselektrodenspannung U_{F}. Dazu wird ein Widerstand R₁₂ mit dem Fußpunkt LOT des Zeilentrafos Z verbunden, um die Basis eines pnp-Tranistors T₂ anzusteuern. Über einen Widerstand R₁₁ sind Basis und Kollektor des pnp-Transistors T₂ miteinander verbunden. Mittels Widerständen R₉ und R₁₀ sind zudem Kollektor und Emitter miteinander verbunden, wobei über die Verbindung der Widerstände R₉ und R₁₀ und der Transistorstufe T₃ die Basis des npn-Transistors T₁ angesteuert wird.

Ändert sich der Strahlstrom I_{S}, verändert sich das Potential am Fußpunkt LOT des Zeilentrafos Z. Steigt beispielsweise der Strahlstrom, so verringert sich das Potential der Strahlstromspannung U_{S} am Fußpunkt LOT des Zeilentrafos Z. Das verringerte Potential liegt über den Widerstand R₁₂ an der Basis des pnp-Transistors T₂ an und verringert den Durchgangswiderstand des pnp-Transistors T₂ und verstärkt somit den Stromfluß durch den pnp-Transistor T₂ sowie durch die an den pnp-Transistor T₂ angeschlossenen Widerstände R₉ und R₁₀ und der Transistorstufe T₃. Dadurch liegt an der Basis des npn-Transistors T₁ ein niedrigeres Potential an, weshalb der Durchgangswiderstand des npn-Transistors T₁ vergrößert wird. Durch die Vergrößerung des Gesamtwiderstandes an der Hochspannung U_{H} verringert sich der Stromfluß. Der verringerte Stromfluß führt zu einem kleineren Spannungsabfall am Widerstand R₁, deshalb steigt die Fokuselektrodenspannung U_{F} an. Somit wird wie gewünscht erreicht, daß bei einem Anstieg der Strahlstromspannung U_{S} bzw. des Strahlstroms eine höhere Fokuselektrodenspannung U_{F} zur Verfügung steht. Analog ergibt sich eine Verringerung der Fokuselektrodenspannung U_{F} bei einer Verringerung der Strahlstromspannung U_{S} bzw. des Strahlstroms. Bei Versuchen hat sich für Bildröhren mit einer Diagonale von 72 cm ergeben, daß der Wert der Summe der Widerstände R₅ R₆ bei ca. 20 MΩ liegen sollte.

## Patentansprüche

1. Vorrichtung für das Erzeugen einer Fokuselektrodenspannung (U_{F}) aus einer Hochspannung (U_{H}) für eine Bildröhre,
**dadurch gekennzeichnet, daß**
die Fokuselektrodenspannung (U_{F}) von einer Einrichtung (F; V, M; 31) zur Erzeugung der Fokuselektrodenspannung (U_{F}) aus dem Strahlstrom (I_{S}) erzeugt wird, wobei die Fokuselektrodenspannung (U_{F}) in Abhängigkeit vom momentan darzustellenden Bildinhalt erzeugt wird, wozu von der Einrichtung (F, V, M, 31) zur Erzeugung der Fokuselektrodenspannung (U_{F}) die Höhe des momentanen Strahlstroms (I_{S}) bzw. der Strahlstromspannung (U_{S})ausgewertet wird.

2. Vorrichtung nach Anspruch 1,
**dadurch gekennzeichnet, daß**
die Einrichtung (V) zur Erzeugung der Fokuselektrodenspannung (U_{F'}) zwei unterschiedliche Fokuselektrodenspannungen (U_{F}) erzeugt, wobei die höhere der beiden Fokuselektrodenspannungen (U_{F'}) für den Fall erzeugt wird, daß die Auswertung bei maximalem Strahlstrom (I_{S}) bzw. niedriger Strahlstromspannung ergibt, daß ein vorgegebener Schwellenwert unterschritten wird.

3. Vorrichtung nach Anspruch 2,
**dadurch gekennzeichnet,daß**
die Einrichtung (V) zur Erzeugung der Fokuselektrodenspannung (U_{F'}) mehr als zwei unterschiedliche Fokuselektrodenspannungen (U_{F'}) erzeugt, in Abhängigkeit von der Auswertung von mehr als einem Schwellenwert für den Strahlstrom (I_{S}) bzw. die Strahlstromspannung.

4. Vorrichtung nach Anspruch 1,
**dadurch gekennzeichnet,daß**
die Einrichtung (31) zur Erzeugung der Fokuselektrodenspannung (U_{F}) die Fokuselektrodenspannungen (U_{F}) stetig erzeugt, wobei für einen niedrigen Strahlstroms (I_{S}) bzw. eine hohe Strahlstromspannung eine niedrige Fokuselektrodenspannungen (U_{F}) und für einen hohen Strahlstrom (I_{S}) bzw. eine niedrige Strahlstromspannung eine hohe Fokuselektrodenspannungen (U_{F}) über einen Spannungsteiler (R₁ bis R₆) dadurch erzeugt wird, daß der Stromfluß durch zumindest einen Teil des Spannungsteilers (R₁ bis R₄) entsprechend der Änderung des Strahlstroms (I_{S}) bzw. der Strahlstromspannung (U_{S}) verändert wird.

5. Vorrichtung nach Anspruch 4,
**dadurch gekennzeichnet,daß**
der Stromfluß durch zumindest einen Teil des Spannungsteilers (R₁ bis R₄) mittels eines Modulators (31) entsprechend der Änderung des Strahlstroms (I_{S}) bzw. der Strahlstromspannung verändert wird.

6. Vorrichtung nach Anspruch 5,
**dadurch gekennzeichnet,daß**
der Modulator (31) vom Fußpunkt (LOT) der Strahlstromspannung (U_{S}) angesteuert wird.

7. Vorrichtung nach Anspruch 4 oder 5,
**dadurch gekennzeichnet,daß**
der Modulator (31) von einem zweistufigen Transistorverstärker (T₁,T₂,T₃) gebildet wird.

8. Verfahren für das Erzeugen einer Fokuselektrodenspannung (U_{F}) aus einem Strahlstroms (I_{S}) für eine Bildröhre,
**dadurch gekennzeichnet,daß**
die Fokuselektrodenspannung (U_{F}) aus dem Strahlstrom (I_{S}) erzeugt wird, wobei die Fokuselektrodenspannung (U_{F}) in Abhängigkeit vom momentan darzustellenden Bildinhalt erzeugt wird, wozu die Höhe des momentanen Strahlstroms (I_{S}) bzw. der Strahlstromspannung (U_{S}) ausgewertet wird.

9. Verfahren nach Anspruch 8,
**dadurch gekennzeichnet,daß**
unterschiedliche, fest vorgegebene Fokuselektrodenspannungen (U_{F}) erzeugt werden, wobei niedrigere Fokuselektrodenspannungen (U_{F}) für den Fall erzeugt werden, daß die Auswertung des Strahlstroms (I_{S}) bzw. der Strahlstromspannung ergibt, daß der Strahlstroms (I_{S}) niedrig ist, und daß hohe Fokuselektrodenspannungen (U_{F}) für den Fall erzeugt werden, daß die Auswertung der Strahlstrom (I_{S}) bzw. die Strahlstromspannung ergibt, daß der Strahlstrom (I_{S}) hoch ist.

10. Verfahren nach Anspruch 9,
**dadurch gekennzeichnet,daß**
für die Auswertung des Strahlstroms (I_{S}) bzw. der Strahlstromspannung mindestens ein Schwellenwert überprüft wird.

11. Verfahren nach Anspruch 8,
**dadurch gekennzeichnet,daß**
die Fokuselektrodenspannung (U_{F}) stetig erzeugt, wobei für einen niedrigen Strahlstrom (U_{S}) eine niedrige Fokuselektrodenspannungen (U_{F}) und für einen hohen Strahlstrom (I_{S}) eine hohe Fokuselektrodenspannungen (U_{F}) erzeugt wird.
